# EUROPÄISCHE PATENTSCHRIFT

(11) **EP 3 020 516 B1**
(45) Veröffentlichungstag und Bekanntmachung des Hinweises auf die Patenterteilung: **22.12.2021**
(21) Anmeldenummer: 15192025.3
(22) Anmeldetag: 29.10.2015
(51) Int. Cl.: B25J 9/16, B25J 13/02

(54) **BESTIMMEN VON OBJEKTBEZOGENEN GREIFRÄUMEN MITTELS EINES ROBOTERS**
DETERMINATION OF OBJECT-RELATED GRIP AREAS BY MEANS OF A ROBOT
DETERMINATION D'ESPACE DE PREHENSION D'UN OBJET A L'AIDE D'UN ROBOT

(30) Priorität: 13.11.2014 DE 102014223167
(43) Veröffentlichungstag der Anmeldung: 18.05.2016
(73) Patentinhaber: KUKA Deutschland GmbH, 86165 Augsburg (DE)
(72) Erfinder: SCHEURER, Christian, 86152 Augsburg (DE); BOBERT, Stephanie, 86153 Augsburg (DE); ZIMMERMANN, Uwe, 86152 Augsburg (DE)
(74) Vertreter: Heselberger, Johannes

(56) Entgegenhaltungen:
- EP-A1- 2 263 837
- EP-A1- 2 481 529
- US-A- 5 325 468
- US-A1- 2013 245 822
- None

## Beschreibung

### 1. Technischer Bereich

Die vorliegende Erfindung betrifft allgemein ein Verfahren und ein System zum Bestimmen von Greifräumen an Objekten, wobei die Objekte durch einen Roboter mittels einer Greifpose basierend auf den bestimmten Greifräumen gegriffen werden sollen.

### 2. Technischer Hintergrund

Bei einem Roboter handelt es sich um ein programmierbares und vielfach einsetzbares Handhabungsgerät. Sie können beweglich oder auch ortsfest eingesetzt werden und sind aufgrund des freiprogrammierbaren Bewegungsablaufs für verschiedene Aufgaben einsetzbar. Roboter werden für verschiedene Arbeitsprozesse in beispielsweise der industriellen Montage oder Fertigung eingesetzt. Im Allgemeinen besteht ein Roboter aus einem Manipulator (Roboterarm), welcher durch entsprechende Antriebe und eine Steuereinrichtung bewegt werden kann. Am Ende eines Roboterarms befindet sich üblicherweise ein Endeffektor, welcher als Arbeitsorgan verschiedene Aufgaben ausführen kann. Als Endeffektoren können beispielsweise Messzeuge, Schrauber, Prüfmittel oder auch Greifer eingesetzt werden. Ein Greifer ist eine Handhabungseinrichtung, welche für einen zeitweiligen Kontakt zu einem Greifobjekt sorgt und die Position und Orientierung des Greifobjekts beim Aufnehmen und während des Ablegens sichert. Das Halten des Greifobjekts wird beispielsweise mit krafterzeugenden, formschließenden oder stoffpaarigen Komponenten erreicht.

Zum Greifen eines Greifobjekts werden üblicherweise einzelne Punkte im Raum fest geteacht. Dabei wird der Roboter, z.B. manuell, so positioniert, dass sich der Greifer in einer geeigneten Lage an dem zu greifenden Objekt befindet. Nach diesem Positionieren des Roboters wird die zugehörige Pose als Greifpose gespeichert. Der Griff des Roboters sollte dabei so gewählt werden, dass er kollisionsfrei ausgeführt werden kann und auch stabil ist, damit das Objekt nicht im Greifer abgleiten oder sich verschieben kann. Dabei sind auch spezielle Einschränkungen zu beachten, da das Objekt gegebenenfalls nicht an jeder Stelle gegriffen werden darf.

Dieses Verfahren der einzelnen Greifbestimmung ist mit einigen Nachteilen verbunden. So setzt ein erfolgreiches Ausführen eines festprogrammierten Griffs voraus, dass sich das zu greifende Objekt immer an der gleichen Stelle und gegebenenfalls in der gleichen Orientierung im Raum befindet. Dies ist jedoch in komplexen Arbeitsumfeldern nicht immer gegeben, in denen sowohl Menschen als auch mehrere Roboter zusammenarbeiten. Ferner setzt ein erfolgreiches Ausführen eines festprogrammierten Griffes weiterhin voraus, dass sich der Roboter immer an der gleichen Stelle befindet. Allerdings kann es in der mobilen Robotik durchaus vorkommen, dass die Positioniergenauigkeit eines mobilen Roboters nicht ausreicht, um einen festen Griff an einem Zielobjekt hinreichend genau auszuüben. Ferner weisen die meisten Objekte mehr als nur einen ausführbaren stabilen Griff auf, welche allerdings durch die oben beschriebene Methode nicht berücksichtigt werden.

Die europäische Patentanmeldung EP 2 263 837 A1 beschreibt ein Verfahren, wobei unter anderem ein Primärformmodell auf 3D-Positionsdaten eines Raums angepasst wird, der einem Erkennungsbereich entspricht, der unter Verwendung einer Entfernungsmessvorrichtung erlangt wird.

Das Dokument EP 2 657 863 A2 beschreibt ein Verfahren zum Generieren von Roboter-Greifmustern unter Verwendung einer Vielzahl von Annäherungsstrahlen die mit einem Objekt assoziiert sind.

Diese beiden Methoden sind ebenfalls relativ aufwendig und erlauben kein intuitives Ermitteln von Greifposen durch den Bediener.

Die EP 2 263 837 A1 betrifft ein Tätigkeitslehrsystem zum Lehren einer Greiftätigkeit einem Roboter, welcher einen Roboterarm hat, der eine Hand zum Greifen eines Arbeitsobjektes einschließt.

Die EP 2 481 529 A1 betrifft ein Verfahren zur Manipulation einer Serie nacheinander präsentierter, identischer oder nahezu identischer Werkstücke eines gegebenen Typs mittels eines Greifers eines Roboters. Die US 5,325,468 betrifft ein Roboterbetriebsplanungssystem zur Planung eines Betriebs, bei dem ein Roboter ein Objekt, das in verschiedenen dreidimensionalen Umgebungen platziert sein kann, ergreift und bewegt.

Vor diesem Hintergrund ist es das Ziel der vorliegenden Erfindung ein Verfahren und ein System bereitzustellen, um ein simples und einfaches Bestimmen von möglichen Greifposen zu ermöglichen. Dabei sollen vorzugsweise Greifposen direkt mit einem Roboter real am Objekt geteacht werden. Ein weiteres Ziel der vorliegenden Erfindung ist es, ein Verfahren zum Bestimmen von Greifposen an einem Objekt und zum Greifen eines Objekts bereitzustellen, wobei die oben genannten Nachteile ausgeräumt oder vermindert werden. Die Aufgabe wird mit den Verfahren gemäß Anspruch 1 und dem Robotersystem gemäß Anspruch 9 gelöst.

### 3. Inhalt der Erfindung

Die Erfindung ist in den Ansprüchen 1 bis 9 definiert.

Das erfindungsgemäße Verfahren betrifft das Bestimmen von mindestens einem Greifraum an einem Objekt, wobei das Objekt durch einen Greifer in einer Greifpose in dem Greifraum, also anhand dieses Greifraums, gegriffen werden soll. Der Greifer wird dabei von einem Roboter geführt, und ist vorzugsweise als Endeffektor ausgebildet und mit dem Roboter verbunden. Die Greifräume umfassen dabei jene Räume, die dem Greifer zum Greifen des Objekts zur Verfügung stehen. Somit können Greifräume als (objektnahe) Arbeitsräume für den Greifer aufgefasst werden, wobei sich der Greifer in dem Arbeitsraum bewegen kann um das Objekt zu greifen. Der Fachmann versteht, dass die Greifräume derart definiert sein sollten, dass Kollisionen zwischen dem Greifer bzw. Roboter und dem Objekt möglichst vermieden werden. Der Begriff "Greifen" ist dabei nicht limitierend und umfasst jede Arten zum Handhaben bzw. Aufnehmen eines Objekts. So kann das Objekt beispielsweise mittels einer Zangenbewegung gegriffen werden oder auch durch einen Magneten oder Sauger aufgenommen werden. Ebenso umfasst der Term "Greifer" unterschiedliche Handhabungsgeräte oder Endeffektoren, die zum entsprechenden "Greifen" eingesetzt werden können. Bei den Objekten kann es sich wiederum um jedes erdenkliche Objekt handeln, welches zum Greifen durch einen Greifer, insbesondere mittels eines Roboters geeignet ist.

Es wird ein Objektkoordinatensystem des Objekts definiert, welches von dem Greifer gegriffen werden soll. Dieser Schritt kann beispielsweise offline durch den Bediener an einem Computer durchgeführt werden. Die Definition des Objektkoordinatensystems kann dabei unter Berücksichtigung der Struktur des zu greifenden Objekts durchgeführt werden. So kann beispielsweise für ein Objekt, welches einen Stab oder eine Stange o.ä. zum Greifen des Objekts aufweist, das Objektkoordinatensystem derart definiert werden, dass eine Achse des Objektkoordinatensystems mit der Ausrichtung des zu greifenden Stabs übereinstimmt. Dabei ist das Objektkoordinatensystem vorzugsweise ein kartesisches Koordinatensystem.

In einem weiteren Schritt wird eine erste und eine zweite Greifpose durch manuelles Positionieren des Greifers an dem Objekt festgelegt. Der Fachmann versteht, dass der Bediener bei diesem Schritt den Greifer oder Roboterarm beispielsweise mit Hilfe von Telemanipulation, wie etwa mittels Bedientasten und/oder einem Joystick o.ä. manuell führen kann ("manuelles Teachem"). Bevorzugt erfolgt beim manuellen Teachen jedoch ein aktives Führen des Greifers oder Roboters per Hand, in dem der Greifer oder Roboter selbst gegriffen und geführt wird. Alternativ wird hierin unter dem Begriff "teachen" aber auch eine Offline-Programmierung verstanden, die beispielsweise auf Strukturdaten des Objekts basieren kann. Wenn im Folgenden von "teachen" gesprochen wird, sind daher immer alle Formen des "teachens" (inkl. Offline-Verfahren) umfasst, sofern es nicht explizit anders angegeben ist. Vorzugsweise liegt die erste Greifpose des Greifers an einem Ende einer greifbaren Region an dem Objekt. Wenn beispielsweise das Objekt an einem Stab gegriffen werden soll, kann die erste Greifpose einem Greifen eines Endes dieses Stabes entsprechen. Weiterhin kann eine zweite festgelegte Greifpose einem Greifen des anderen Endes dieses Stabes entsprechen. Die Anzahl der zu festzulegenden Greifposen kann dabei variieren, und der Fachmann versteht, dass es im Ermessen des Fachmanns selbst liegt, für Objekte mit komplexen Strukturen mehrere Greifposen durch Positionieren des Greifers festzulegen.

In einem weiteren Schritt werden weitere Greifposen an dem Objekt vorgegeben. Vorzugsweise umfasst dieses Vorgeben ein Berechnen bzw. Ermitteln weiterer Greifposen basierend auf den festgelegten bzw. geteachten Greifpose(n). Wenn beispielsweise in einem vorangegangenen Schritt zwei Greifposen entlang eines Stabes festgelegt wurden, umfasst das Vorgeben weiterer Greifposen vorzugsweise das Vorgeben von vielen Greifposen zwischen diesen beiden festgelegten Greifposen. Das Vorgeben weiterer Greifposen wird vorzugsweise unter Berücksichtigung translatorischer und/oder rotatorischer Freiheitsgrade des Objekts durchgeführt. Das Vorgeben wird vorzugsweise durch den Bediener offline an einem Computer durchgeführt. Dabei werden vorher bereitgestellte Strukturdaten, insbesondere CAD-Daten des Objekts, berücksichtigt. Dabei umfassen Strukturdaten ganz allgemein alle Daten, die beliebige strukturelle Informationen bzgl. des zu greifenden Objekts beinhalten. Strukturdaten, also Daten die z.B. für die Geometrie des Objekts repräsentativ sind, können auch manuell in die Steuerung eingepflegt werden oder automatsch, etwa über visuelle Messverfahren, generiert werden.

In einem weiteren Schritt wird basierend auf den festgelegten und vorgegebenen Greifposen ein erster Greifraum des Objekts bestimmt, wobei dieser Greifraum in dem definierten Objektkoordinatensystem des Objekts bestimmt wird. Vorzugsweise wird in einem anschließenden Schritt dieser erste Greifraum für eine spätere Verwendung gespeichert. Hierbei kann vorzugsweise auch eine initiale Greifpose festgelegt werden und zusammen mit dem Greifraum für eine spätere Verwendung gespeichert werden. Dabei können vorteilhaft zusammen mit einer initialen Greifpose auch zusätzliche Parameter hinterlegt werden, wie beispielsweise Positionen von Fingern, die insbesondere von Robotern mit 3- oder Mehrfingergreifern vorteilhaft verwendet werden können um das Objekt zu greifen. Dieser Schritt des Bestimmens eines ersten Greifraums wird ebenfalls vorzugsweise offline mittels eines Computers durchgeführt. Weiterhin vorzugsweise erfolgt auch dieser Schritt basierend auf vorher bereitgestellten Strukturdaten.

Das Verfahren ermöglicht es somit, mögliche Greifräume für ein Objekt einfach und intuitiv festzulegen. Dabei müssen nur wenige Greifposen direkt am Objekt festgelegt werden, d.h. z.B. durch einen Menschen aktiv definiert werden. Durch das geschickte Auswählen der festzulegenden oder zu teachenden Greifposen können unter Ausnutzung der Struktur des zu greifenden Objekts weitere Greifposen bestimmt werden, ohne diese aufwendig manuell zu teachen und ohne aufwendige Simulationen durchführen zu müssen. Dadurch, dass die Greifräume und vorzugsweise auch die Greifposen im Objektkoordinatensystem des Objekts festgelegt werden, sind die Greifräume unabhängig von der Position des Objekts in der realen Welt. Folglich werden die Greifräume eines Objekts in Relation zu dem Objekt selber festgelegt, also unabhängig von der absoluten Position des Objekts. Dadurch ist es möglich, Greifräume ortsunabhängig zu bestimmen und ferner auch Greifposen aus den Greifräumen unabhängig von der Position des zu greifenden Objekts zu ermitteln.

Das Objekt wird durch einen an einem Roboter vorgesehenen Greifer gegriffen wobei das Objekt anhand von Sensoren erkannt wird. Diese Sensoren können dabei vorzugsweise optische Sensoren umfassen, die vorzugsweise an dem Roboter angebracht sind. Beispielsweise können die Sensoren Stereo-Kamerasysteme, 3D-Kamerasysteme, oder ähnliches umfassen. Somit kann der Roboter vorzugsweise anhand der bereitgestellten Strukturdaten, wie etwa von CAD-Daten, das Objekt erkennen, in dem er die erfassten Daten mit den gespeicherten Daten des Objekts vergleicht. Dadurch ist es möglich das Objekt ohne aufwendige Positionierung bereitzustellen, um Greifräume an diesem Objekt zu bestimmen.

Ein erfindungsgemäßes Verfahren zum Greifen eines Objekts durch einen Roboter umfasst das Bereitstellen eines Greifraums welcher anhand des Verfahrens zum Bestimmen von Greifräumen bestimmt wurde. Der Roboter kann dabei jede Art von Roboter sein, welcher zumindest einen Endeffektor aufweist, welcher zum Greifen eines Objekts geeignet ist. In einem weiteren Schritt werden sowohl ein Roboter als auch ein Objekt bereitgestellt, wobei das Objekt von dem Roboter gegriffen werden soll. Basierend auf den bereitgestellten Greifräumen wird eine Greifpose ausgewählt. Das Auswählen kann dabei das Wählen einer festgelegten ersten Greifpose umfassen, welche zusammen mit dem Greifraum festgelegt wurde. Ferner kann der Roboter auch unter Berücksichtigung seiner aktuellen Position und der Position des Objekts und vorzugsweise auch unter Berücksichtigung der Orientierung des Objekts, unter Berücksichtigung von Hindernissen bzw. möglichen Kollisionen etc. eine andere, geeignete Greifpose auswählen. In einem folgenden Schritt wird die ausgewählte Greifpose durch den Roboter angefahren und das Objekt wird gegriffen.

Das Verfahren ermöglicht zudem ein direktes Prüfen der bestimmten Greifräume auf Ausführbarkeit und Tauglichkeit. So können beispielhafte aus den Greifräumen erzeugte Greifposen direkt durch den Roboter angefahren werden, um diese zu überprüfen. Ferner ermöglicht es das Verfahren, die Objektgeometrie direkt beim Aufbau bzw. Bestimmen der Greifräume auszunutzen. Das Verfahren erfordert zudem nur geringe Rechenkapazitäten, da keine aufwendigen Rechnungen durchzuführen sind. Ferner entsprechen die bestimmten Greifräume den Vorstellungen des Bedieners, da keine ungewollten Greifräume oder Greifposen zustande kommen können. Dementsprechend können zufällig ausgeführte Griffe vermieden werden, die andernfalls evtl. Kollisionen hervorrufen könnten.

Das erfindungsgemäße Robotersystem - umfassend einen Roboter, welcher zum Greifen von Objekten mittels eines Greifers eingerichtet ist - ist mit einer Steuervorrichtung versehen, die zur Durchführung eines erfindungsgemäßen Verfahrens eingerichtet ist, um die beschriebenen Verfahrensschritte ausführen zu können. Das Robotersystem umfasst dabei vorzugsweise zumindest einen Sensor, welcher zum Erkennen von Objekten eingerichtet ist.

### 4. Ausführungsbeispiele

Im Folgenden wird die Erfindung unter Bezugnahme auf die beigefügten Figuren genauer erläutert. Hierbei zeigen:
Fig. 1a und Fig. 1b schematisch zwei beispielhafte Griffe eines Roboters an einem Objekt;
Fig. 2a und Fig. 2b schematisch zwei beispielhafte Griffe eines Roboters an einem anderen Objekt;
Fig. 3 ein Flussdiagramm, welches schematisch und beispielhaft den Ablauf eines Verfahrens zum Bestimmen von Greifräumen an einem Objekt darlegt;
Fig. 4 ein Flussdiagramm, welches ebenfalls schematisch und beispielhaft den Ablauf eines Verfahrens zum Bestimmen von Greifräumen an einem Objekt darlegt.

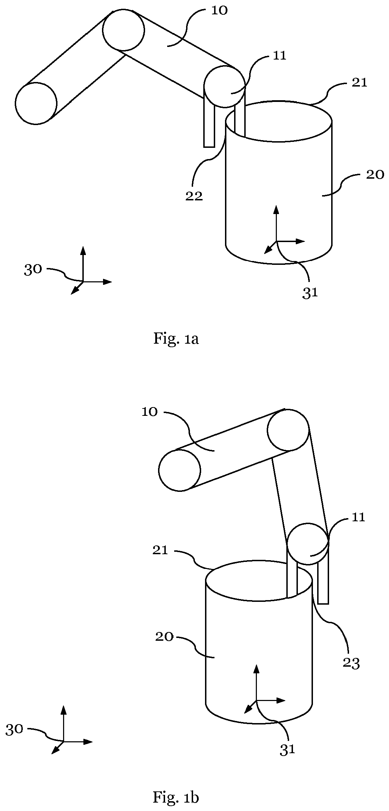

Die Figuren 1a und 1b zeigen einen Roboterarm 10 eines Roboters, und ein zu greifendes Objekt 20. Der Roboterarm 10 weist an einem Ende einen Endeffektor auf, welcher als Greifer 11 mit zwei Greiffingern ausgebildet ist. Die Erfindung ist jedoch nicht auf derartige mechanische Greifer beschränkt, sondern umfasst auch Greifer in der Form von z.B. Sauggreifer oder Magnetgreifer. Das zu greifende Objekt 20 hat die Form einer Röhre, wobei das Objekt 20 durch den Roboter 10 am Rand 21 des röhrenförmigen Objekts 20 gegriffen werden soll. Dabei gibt es viele Möglichkeiten für den Roboter 10 das Objekt 20 an seinem Rand 21 zu greifen. Beispielsweise, wie in Fig. 1a gezeigt, kann der Roboter 10 das Objekt 20 am Punkt 22 greifen, oder beispielsweise, wie in Fig. 1b gezeigt, an Punkt 23.

Ferner zeigen die Figuren 1a und 1b beispielhaft den Ursprung des Weltkoordinatensystems 30 und den Ursprung des Objektkoordinatensystems 31, welche nicht übereinstimmen. Das Objektkoordinatensystem 31 ist dabei vorteilhaft ins Zentrum des zylinderförmigen Objekts 20 gelegt, wobei eine Achse des kartesischen Objektkoordinatensystems 31 der Längsrichtung des Objekts 20 entspricht. Durch das Verfahren werden Greifräume bezüglich des Objektkoordinatensystems 31 des Objekts 20 definiert, sodass die Greifräume unabhängig von der absoluten Position des Objekts im Weltkoordinatensystem 30 bestimmt werden können.

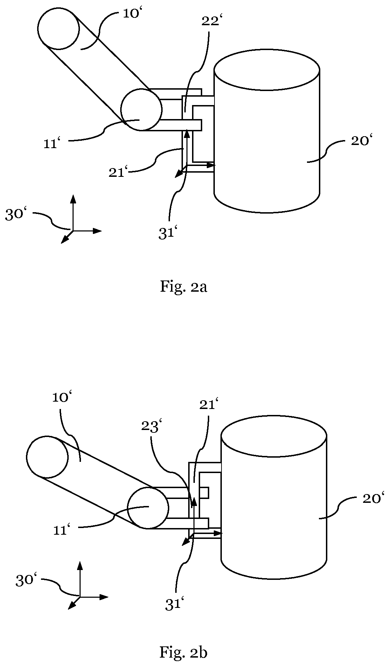

Die Figuren 2a und 2b zeigen eine weitere Situation, in der das Objekt 20' durch den Greifer 11' des Roboterarm 10' an dem Henkel 21' des Objekts 20' gegriffen werden soll. Hier gibt es ebenfalls verschiedene Möglichkeiten zum Greifen des Objekts 20', so kann das Objekt 20' beispielsweise, wie in Fig. 2a dargestellt, an Stelle 22' gegriffen werden, oder beispielsweise, wie in Fig. 2b dargestellt, an Stelle 23' gegriffen werden. Im Gegensatz zu der Darstellung aus den Figuren 1a und 1b ist das Objektkoordinatensystem 31' in den Figuren 2a und 2b vorteilhaft so gelegt, dass eine Achse des Objektkoordinatensystems 31' mit der Längsrichtung des Griffs 21' übereinstimmt.

Der Fachmann versteht, dass für ein Objekt auch mehrere Objektkoordinatensysteme definiert werden können. Wenn das Objekt 20' aus den Figuren 2a und 2b sowohl an dem Henkel 21' als auch am oberen Rand gegriffen werden kann, wie es in den Figuren 1a und 1b der Fall ist, so kann zusätzlich zu dem Objektkoordinatensystem 31' auch ein weiteres definiert werden, welches beispielsweise mit dem Objektkoordinatensystem 30 aus den Figuren 1a und 1b übereinstimmt. Ferner können auch ein oder auch mehrere Referenzpunkte definiert werden, welche beispielsweise die Position des Objekts im Weltkoordinatensystem 30, 30' festlegen und/oder beispielsweise die Position der greifbaren Region 21, 21' festlegen.

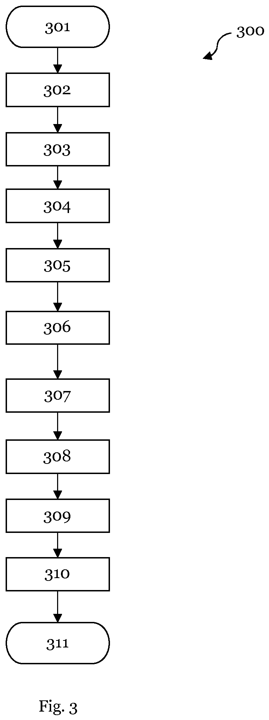

Die Fig. 3 zeigt ein Ablaufdiagramm zur Durchführung eines beispielhaften Verfahrens 300. Im Folgenden wird das Verfahren 300 exemplarisch in Bezug auf das in Fig. 1a bzw. Fig. 1b dargestellte System beschrieben. Das Verfahren beginnt im Schritt 301. Im Schritt 302 wird der Roboter bereitgestellt. In Schritt 303 wird das zu greifende Objekt 20 bereitgestellt. Im Schritt 304 werden Strukturdaten des Objekts 20 bereitgestellt. Die Strukturdaten können dabei beispielsweise der Steuerung des Roboters und/oder auch auf einem externen Computer bereitgestellt werden. Das Bereitstellen der Strukturdaten kann auch zu einem anderen Zeitpunkt erfolgen, wie beispielsweise vor dem Bereitstellen des Roboters und/oder vor dem Bereitstellen des Objekts.

Im Schritt 305 wird ein Objektkoordinatensystem für das Objekt definiert. Dies kann dabei vorzugsweise durch den Benutzer an dem externen Computer durchgeführt werden. Ferner kann dieser Schritt vorzugsweise unter Berücksichtigung der bereitgestellten Strukturdaten erfolgen. In dem Schritt 306 wird das Objekt durch den Roboter anhand von Sensoren erkannt, wobei auch dieses Erkennen auf den bereitgestellten Strukturdaten basiert.

Im Schritt 307 wird eine erste Greifpose geteacht, wobei das Objekt 20 an einer ersten Stelle 22 durch den Roboter gegriffen wird. Hierzu führt der Anwender den Roboter vorzugsweise direkt und aktiv per Hand an das zu greifende Objekt heran (sogenanntes Playback-Verfahren). Im Schritt 308 wird eine zweite Greifpose geteacht, wobei das Objekt 20 durch den Roboter an der Stelle 23 gegriffen wird. Auch zum Teachen der zweiten Pose wird der Roboter vorzugsweise direkt von Hand geführt. Alternativ kommt aber auch ein Führen mittels Telemanipulation, wie etwa mittels eines Joysticks, in Betracht oder auch (wenn auch weniger bevorzugt) ein reines Offline-Teachen.

Im Schritt 309 werden weitere Greifposen berechnet. Dieser Schritt geschieht vorzugsweise offline ohne den Roboter verfahren zu müssen. In Anlehnung an die Situation aus Fig. 1a können dabei die Greifposen derart bestimmt werden, dass sie unter Ausnutzung des rotatorischen Freiheitsgrades entlang des Randes 21 des Objekts 20 bestimmt werden.

Im Schritt 310 wird basierend auf den geteachten und bestimmten Greifposen ein erster Greifraum des Objekts festgelegt, wobei der erste Greifraum im Objektkoordinatensystem des Objekts festgelegt wird. In Anlehnung an die Situation aus Fig. 1a kann dieser erste Greifraum derart ausgebildet sein, dass er ein Greifen des Objekts 20 an irgendeiner Stelle entlang des Randes 21 ermöglicht, ohne dass der Roboter mit dem Objekt 20 kollidiert. Der festgelegte Greifraum wird vorteilhaft gespeichert. Anschließend endet das Verfahren 300 im Schritt 311.

Der Fachmann versteht, dass zumindest einige Schritte des Verfahrens 300 mehrfach durchgeführt werden können, um beispielsweise weitere Greifräume an demselben Objekt zu ermitteln.

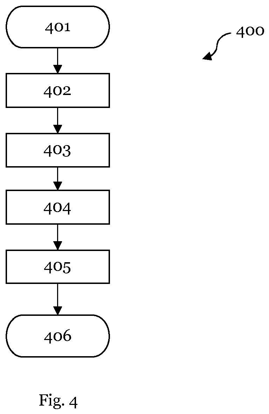

Die Fig. 4 zeigt ein beispielhaftes Verfahren 400. Dieses Verfahren beginnt im Schritt 401. Im Schritt 402 wird ein lokales Koordinatensystem für das Objekt festgelegt. Hierzu kann beispielsweise das Objekt auf einen Marker platziert werden, wobei die Position des Markers fest definiert ist. Die Marker-Position kann über bekannte Verfahren eingemessen werden (beispielsweise Base-Einmessung, optische Markererkennung, etc.). Alternativ kann auch ein Sensorsystem verwendet werden, um das Objekt aufgrund von vorhandenen Modellen erkennen zu können.

Im Schritt 403 wird ein Greif-Offset ermittelt. Dieser Greif-Offset entspricht der Position des zu greifenden Bereichs in Relation zu dem lokalen Koordinatensystem des Objekts.

In dem Schritt 404 wird ein Roboter in eine erste Greifpose an dem Objekt gebracht, und die aktuelle Position des Werkzeugmittelpunkts geteacht. Auch dies erfolgt vorzugsweise durch ein direktes und aktives Führen des Roboters per Hand an das zu greifende Objekt heran oder durch ein Führen mittels Telemanipulation. Anschließend wird ein Endeffektor-Offset zu dieser ersten Greifpose in Relation zu der Position des zu greifendem Bereichs bestimmt.

In dem Schritt 405 werden die Grenzen des Greifraums bezüglich der ersten Greifpose ermittelt. Hierfür wird der Werkzeugmittelpunkt für jede der zu ermittelnden Grenzen an den zugehörigen äußeren Rand des Greifraums geführt und die aktuelle Lage geteacht. Hierzu kann der Benutzer optional auch translatorische und/oder rotatorische Freiheitsgrade des Objekts ausnutzen, um die Grenzen des Greifraums zu bestimmen. Das Verfahren 400 endet im Schritt 406.

Zum Greifen eines Objekts durch einen Roboter anhand eines bestimmten Greifraums wird eine gültige Greifpose basierend auf dem bestimmten Greifraum ermittelt. Anhand dieser ermittelten Greifpose fährt der Roboter diese Greifpose an und greift das Objekt.

Der Fachmann versteht, dass mehrere der oben beschrieben Schritte mehrere einzelne Schritte wie beispielsweise Koordinatentransformationen umfassen. So kann beispielsweise der Schritt des Festlegens eines Greifraums oder auch das Auswählen einer Greifpose basierend auf einem Greifraum die Transformation von mehreren Positionen umfassen.

### Bezugszeichen:

- 10,10': Roboterarm
- 11,11': Greifer
- 20,20': Objekt
- 21,21': Rand, Henkel
- 22, 23, 22', 23': Greifpunkte
- 30,30': Weltkoordinatensystem
- 31,31': Objektkoordinatensystem

## Patentansprüche

1. Verfahren zum Bestimmen mindestens eines Greifraumes an einem Objekt (20, 20'), wobei das Objekt (20, 20') durch einen Greifer (11, 11') in einer Greifpose in dem Greifraum gegriffen werden soll, wobei die Greifpose eine zum Greifen geeignete Lage des Greifers (11, 11') an dem zu greifenden Objekt (20, 20') umfasst, aufweisend folgende Verfahrensschritte:
a) Bereitstellen zumindest eines Roboters und eines Greifers (11, 11'), der von dem Roboter geführt wird, und zumindest eines Objekts (20, 20'), das vom Roboter mittels des Greifers (11, 11') gegriffen werden soll;
b) Definieren eines Objektkoordinatensystems (31, 31') des Objekts (20, 20'), das von dem Greifer (11,11') gegriffen werden soll;
c) Festlegen einer ersten und einer zweiten Greifpose durch manuelles Positionieren des Greifers (11, 11') an dem Objekt (20, 20');
d) Berechnen mindestens einer weiteren Greifpose an dem Objekt (20, 20') im Objektkoordinatensystem (31,31') des Objekts (20, 20') basierend auf bereitgestellten Strukturdaten des Objekts (20, 20') und auf der ersten und zweiten Greifpose, wobei die mindestens eine weitere Greifpose zwischen den festgelegten Greifposen liegt; und
e) Bestimmen eines ersten Greifraums im Objektkoordinatensystem (31,31') des Objekts (20, 20'), wobei der Greifraum den Raum umfasst, der dem Greifer (11, 11') in der ersten, der zweiten und der mindestens einen weiteren Greifpose zur Verfügung steht.

2. Verfahren nach Anspruch 1, wobei die Strukturdaten des Objekts (20, 20'), CAD-Daten umfassen.

3. Verfahren nach einem der vorstehenden Ansprüche,
wobei das Objekts (20, 20') auf einem vordefinierten Marker bereitgestellt wird.

4. Verfahren nach Anspruch 3, wobei das bereitgestellte Objekt (20, 20') durch den Roboter mittels zumindest eines Sensors erkannt wird, wobei der zumindest eine Sensor einen optischen Sensor umfasst und wobei das Erkennen auf den bereitgestellten Strukturdaten basiert.

5. Verfahren nach einem der vorstehenden Ansprüche, wobei Schritt d) basierend auf rotatorischen und/oder translatorischen Freiheitsgraden des Objekts (20, 20') erfolgt.

6. Verfahren nach einem der vorstehenden Ansprüche, wobei Schritt c) das Führen des Greifers (11, 11') an das reale Objekt (20, 20') umfasst.

7. Verfahren nach Anspruch 6, wobei das Führen des Greifers (11, 11') an das reale Objekt (20, 20') ein aktives Führen des Greifers (11, 11') per Hand umfasst und/oder ein aktives Führen des Greifers (11, 11') mittels einer Telemanipulationseinrichtung, insbesondere einem Joystick, umfasst.

8. Verfahren zum Greifen eines Objekts (20, 20') durch einen Roboter, aufweisend folgende Verfahrensschritte:
a) Bereitstellen eines nach einem der Ansprüche 1 bis 7 bestimmten Greifraums;
b) Auswählen einer Greifpose basierend auf dem bereitgestellten Greifraum;
c) Anfahren der ausgewählten Greifpose; und
d) Greifen des Objekts (20, 20').

9. Robotersystem, umfassend einen Roboter, einen Greifer (11, 1'), der von dem Roboter geführt wird, und eine Steuervorrichtung, die zur Durchführung eines Verfahrens nach einem der Ansprüche 1-8 eingerichtet ist.

## Claims

1. A method for determining at least one gripping region on an object (20, 20'), wherein the object (20, 20') is to be gripped by a gripper (11, 11') in a gripping pose in the gripping region, wherein the gripping pose comprises a position of the gripper (11, 11') suitable for gripping on the object (20, 20') to be gripped, having the following method steps:
a) provision of at least one robot and one gripper (11, 11') which is guided by the robot, and at least one object (20, 20') which is to be gripped by the robot by means of the gripper (11, 11');
b) definition of an object coordinate system (31, 31') of the object (20,20') to be gripped by the gripper (11, 11');
c) configuration of a first and a second gripping pose by manually positioning the gripper (11, 11') at the object (20, 20');
d) calculation of at least one further gripping pose at the object (20,20') in the object coordinate system (31, 31') of the object (20, 20') based on provided structural data of the object (20, 20') and on the first and second gripping pose, wherein the at least one further gripping pose lies between the configurated gripping poses; and
e) determination of a first gripping region in the object coordinate system (31, 31') of the object (20, 20'), wherein the gripping region comprises the region, which is available to the gripper (11, 11') in the first, the second and the at least one further gripping pose.

2. The method according to claim 1, wherein the structural data of the object (20, 20'), comprises CAD data.

3. The method according to any one of the preceding claims, wherein the object (20, 20') is provided on a predefined marker.

4. The method according to claim 3, wherein the provided object (20, 20') is recognized by the robot by means of at least one sensor, wherein the at least one sensor comprises an optical sensor and wherein the recognition is based on the provided structural data.

5. The method according to any one of the preceding claims, wherein step d) occurs based on rotational and/or translational degrees of freedom of the object (20, 20').

6. The method according to any one of the preceding claims, wherein step c) comprises guiding the gripper (11,11') to the real object (20,20').

7. The method according to claim 6, wherein guiding the gripper (11, 11') to the real object (20, 20') comprises actively guiding the gripper (11, 11') by hand and/or actively guiding the gripper (11, 11') by means of a telemanipulation device, in particular a joystick.

8. A method for gripping an object (20, 20') by a robot, comprising the following method steps:
a) provision of a gripping region determined according to one of claims 1 to 7;
b) selection of a gripping pose based on the provided gripping region;
c) approaching the selected gripping pose; and
d) gripping of the object (20, 20').

9. A robot system comprising a robot, a gripper (11, 11') guided by the robot, and a control device adapted to perform a method according to any one of claims 1 - 8.

## Revendications

1. Procédé de détermination d'au moins un espace de préhension sur un objet (20, 20'), l'objet (20, 20') devant être pris par un préhenseur (11, 11') dans une pose de préhension dans l'espace de préhension, la pose de préhension incluant une position du préhenseur (11, 11') appropriée à la préhension sur l'objet à prendre (20, 20'), comprenant les étapes de procédé suivantes :
a) obtention d'au moins un robot et d'un préhenseur (11, 11'), lequel est guidé par le robot, et d'au moins un objet (20, 20') qui doit être pris par le robot au moyen du préhenseur (11, 11') ;
b) définition d'un système de coordonnées d'objet (31, 31') de l'objet (20, 20') qui doit être pris par le préhenseur (11, 11') ;
c) définition d'une première et d'une deuxième pose de préhension par positionnement manuel du préhenseur (11, 11') sur l'objet (20, 20') ;
d) calcul d'au moins une autre pose de préhension sur l'objet (20, 20') dans le système de coordonnées d'objet (31, 31') de l'objet (20, 20'), sur la base de données structurelles fournies de l'objet (20, 20') et des première et deuxième poses de préhension, la au moins une autre pose de préhension se trouvant entre les poses de préhension définies ; et
e) détermination d'un premier espace de préhension dans le système de coordonnées d'objet (31, 31') de l'objet (20, 20'), l'espace de préhension incluant l'espace dont dispose le préhenseur (11, 11') dans la première, la deuxième et la au moins une autre pose de préhension.

2. Procédé selon la revendication 1, dans lequel les données structurelles de l'objet (20, 20') incluent des données de CAO.

3. Procédé selon une des revendications précédentes, dans lequel l'objet (20, 20') est mis en place sur un marqueur prédéfini.

4. Procédé selon la revendication 3, dans lequel l'objet (20, 20') mis en place est détecté au moyen d'au moins un capteur, le au moins un capteur inclut un capteur optique, et la détection est basée sur les données structurelles fournies.

5. Procédé selon une des revendications précédentes, dans lequel l'étape d) s'effectue sur la base de degrés de liberté de l'objet (20, 20') en rotation et/ou en translation.

6. Procédé selon une des revendications précédentes, dans lequel l'étape c) inclut le guidage du préhenseur (11, 11') vers l'objet réel (20, 20').

7. Procédé selon la revendication 6, dans lequel le guidage du préhenseur (11, 11') vers l'objet réel (20, 20') inclut un guidage actif du préhenseur (11, 11') à la main et/ou un guidage actif du préhenseur (11, 11') au moyen d'un équipement de télémanipulation, en particulier d'une manette.

8. Procédé de préhension d'un objet (20, 20') par l'intermédiaire d'un robot, comprenant les étapes de procédé suivantes :
a) obtention d'un espace de préhension déterminé selon une des revendications 1 à 7 ;
b) choix d'une pose de préhension sur la base de l'espace de préhension fourni ;
c) atteinte de la pose de préhension sélectionnée ; et
d) préhension de l'objet (20, 20').

9. Système de robot incluant un robot, un préhenseur (11, 11') qui est guidé par le robot, et un dispositif de commande qui est agencé pour réaliser un procédé selon une des revendications 1 à 8.
